# EUROPÄISCHE PATENTSCHRIFT

(11) **EP 3 654 062 B1**
(45) Veröffentlichungstag und Bekanntmachung des Hinweises auf die Patenterteilung: **02.04.2025**
(21) Anmeldenummer: 18206703.3
(22) Anmeldetag: 16.11.2018
(51) Int. Cl.: G01S 17/10, G01S 17/42, G01S 17/89, G01S 7/497

(54) **DISTANZMESSVORRICHTUNG MIT HOHER SIGNALDYNAMIK UND DARAN ANGEPASSTEM REFERENZLICHTWEG**
DISTANCE MEASURING DEVICE WITH HIGH SIGNAL DYNAMICS AND REFERENCE LIGHT PATH ADAPTED THERETO
DISPOSITIF DE MESURE DE DISTANCE À DYNAMIQUE DE SIGNAL ÉLEVÉE ET CHEMIN OPTIQUE DE RÉFÉRENCE ADAPTÉ AUDIT DISPOSITIF

(43) Veröffentlichungstag der Anmeldung: 20.05.2020
(73) Patentinhaber: Hexagon Technology Center GmbH, 9435 Heerbrugg (CH)
(72) Erfinder: HINDERLING, Jürg, CH-9437 Marbach (CH); BESTLER, Simon, 88085 Langenargen (DE); STUTZ, Reto, CH-9434 Au (CH); WOHLGENANNT, Rainer, A-6833 Klaus (AT)
(74) Vertreter: Kaminski Harmann

(56) Entgegenhaltungen:
- EP-A2- 0 066 888
- US-A1- 2007 121 095
- US-B2- 8 305 561

## Beschreibung

Die Erfindung betrifft ein Vermessungsgerät, insbesondere Tachymeter, Theodolit, Laserscanner, Profiler, oder Lasertracker, mit einem Distanzmessmodul, das einen optischen Sendekanal mit einer Sendeeinheit und einen optischen Empfangskanal mit einer Empfangseinheit umfasst. Zwischen dem Sendekanal und dem Empfangskanal ist ein Messlichtweg für Lasermessstrahlung ausgebildet, wobei die Empfangseinheit Messsignale mit unterschiedlichen Signalstärken erfassbar macht. Systematische Fehler der Laufzeiten, die insbesondere von der jeweiligen Signalstärke abhängen, werden mit der Erfassung von über einen Referenzlichtweg geführter Lasermessstrahlung ermittelt. Die ermittelten systematischen Fehler werden zur Verbesserung der gemessenen Rohdistanzwerte verwendet.

Die Stärke des Empfangssignals zu der über den Messlichtweg geführten Lasermessstrahlung wird einerseits durch den abzudeckenden Distanzbereich und anderseits durch die unterschiedliche Reflektivität der Oberflächen der anzumessenden Objekte festgelegt. Insbesondere Objekte mit spiegelnden oder glänzenden Oberflächen erzeugen je nach Einfallswinkel des optischen Messstrahls sehr unterschiedliche Signalamplituden in der Empfangseinheit des Distanzmessmoduls.

Es gibt Anwendungen, in denen ein grosser zu bestimmender Distanzbereich von weniger als 1m bis über mehrere Kilometer abgedeckt wird, wobei stark diffus lichtstreuende Zielobjekte mit ausgesprochen wenig Rückstreuung als auch prismatische Zielobjekte mit Retroreflexion und höchster optischer Qualität, und entsprechend hoch intensiver Rückstrahlung, angemessen werden. Dabei ist die Signalstärke des rückreflektierten und anschliessend empfangenen Signals sehr unterschiedlich. Die Variation reicht typisch über fünf Grössenordnungen. Bisherige Empfängerelektroniken decken dabei lediglich einen Amplitudenbereich von zehn Bit ab. Oft werden Signale im unteren Dynamik-Bereich nicht genutzt, weil dort das Signal-Rauschverhältnis niedrig ist. Dann überstreicht die genutzte Signaldynamik beispielsweise noch sieben Bit.

Distanzmesseinheiten weisen diverse systematische Fehler auf, welche das Messergebnis verfälschen. Einige der Fehlerquellen hängen von der Signalamplitude ab, beispielsweise effektive Transitzeiten in einstellbaren Abschwächeinheiten oder Signalverzerrungen in der Empfangseinheit. Genaue Distanzmesseinheiten umfassen in der Regel einen Referenzsignalweg oder Referenzlichtweg, über den bei Bedarf ein Referenzsignal zur Ermittlung einer Referenz-Lichtlaufzeit geführt wird. Da dieses Referenzsignal einen genau definierten Weg durchläuft, können beispielsweise von der Signalamplitude abhängige Fehler der Laufzeit im Distanzmessmodul erfasst und kompensiert bzw. korrigiert werden.

Für Kompensationen bzw. Korrekturen ist es wichtig, dass das empfangene Referenzsignal keine Störungen aufweist. Zudem sollte die Signaldynamik des Messlichtwegs und des Referenzlichtwegs möglichst ähnlich sein. Bei den aus dem Stande der Technik bekannten Lösungen ist jedoch oft die Dynamik des Messsignals für Distanzwerte grösser als die auf dem Referenzlichtweg erzielbare Signaldynamik und entsprechend können systematische signalstärkenabhängige Messfehler für Messwerte zu Messsignalen ausserhalb der Signaldynamik des Referenzlichtwegs nicht genügend gut kompensiert werden.

DE 10 2010 032 724 A1 beschreibt ein als Laserscanner mit einem rotierenden Ablenkspiegel ausgebildetes Messgerät, wobei ein Referenzlichtweg, über eine Reflexion an der Traverse des Messgerätes erzeugt wird. Der rotierende Spiegel bewegt den Messstrahl dabei sowohl über den zu vermessenden vom Messgerät abgelegenen Bereich als auch über die Traverse der den Ablenkspiegel tragenden Stütze des Messgerätes, so dass bei jeder Umdrehung des Spiegels nebst den Messsignalen für Distanzwerte auch Messsignale zur festen Distanz vom Spiegel zur Traverse ermittelt werden können. Um von der Signalintensität abhängige Messfehler über die Referenzmessungen erfassen zu können, wird die Reflexion an der Traverse mit bekannten unterschiedlichen Helligkeiten eines Prismas durchgeführt. Die mit Messungen über den Referenzlichtweg für unterschiedliche Signalintensitäten ermittelten Kompensationswerte werden zur Korrektur der Distanzwerte für die vom Messgerät abgelegenen Bereiche entsprechend der jeweiligen Signalintensität verwendet. Die mit der Reflexion an Prismen bei der Traverse erzielbare Abschwächung ist aufgrund der hohen Reflektivität von Prismen jedoch limitiert, so dass oft keine genügend grosse Signaldynamik erzielt werden kann. Entsprechend ist eine Kompensation von Distanzmessfehlern bei kleinen Signalintensitäten nicht möglich. Laserscanner mit Referenzlichtwegen zur Referenzmessung sind z.B. aus US 2007/121095 A1, EP 0 066 888 A2, oder US 8 305 561 B2 bekannt.

Ferner kann in Anordnungen des Stands der Technik, insbesondere bei einem Referenzlichtweg mit einem reflektiven externen Referenzziel, beispielsweise angeordnet in Nadir-Richtung an der Traverse eines einen Rotationsspiegel aufweisenden Laserscanners, parasitäres Streulicht in den Referenzpfad eingekoppelt werden, wobei das Streulicht wegen Mehrfachreflexionen eine andere Laufzeit aufweisen kann. Entsprechend wird die Laufzeit des Referenzsignals verfälscht.

Referenzlichtwege, die über ein externes Referenzziel führen, haben den Nachteil, dass deren reflektierenden oder streuenden Elemente verschmutzt werden. Schmutzpartikel wiederum reduzieren nicht nur das Referenzsignal, sondern verfälschen durch Streulicht die nominelle Lichtlaufzeit, da Streulicht typischerweise Trajektorien durchläuft, welche länger sind als der vorgesehene Referenzpfad. Auch wenn reflektierende oder streuende Elemente durch ein Deckglas geschützt sind, entstehen Trajektorien mit abweichenden Lichtlaufzeiten.

Alle aus dem Stande der Technik bekannten Referenzlichtwege haben einen eingeschränkten Signalamplitudenbereich und es ist beispielsweise nicht möglich eine Empfangseinheit mit modernen Photo-Sensoren mit erweitertem Dynamikbereich insitu zu kalibrieren.

In neuster Zeit sind verbesserte Sensoren und Empfangsschaltungen entwickelt worden, die einen erweiterten Amplitudenbereich von Empfangssignalen verarbeiten können. Oft sind solche Empfänger-Elektroniken aber nicht linear bezüglich der eintreffenden Signalamplitude und verzerren dadurch entweder die Form von Impulsen bzw. Impulsfolgen oder deren zeitlichen Phasen. Solche Effekte führen zu systematischen Distanzfehlern (Range Walk). EP 3 098 626 beschreibt eine Empfangseinheit, welche einen um einen Faktor 200 erweiterten Amplitudenbereich abdeckt. Zudem ist der Rauschpegel sehr klein, was den nutzbaren Dynamikbereich nochmals gegen kleine Signalintensitäten erweitert.

Es sind Empfangseinheiten mit signalkomprimierenden Photodioden bekannt. Zum Beispiel lösen so genannte Semiconductor-Photomultiplier Sensoren (SPM-Sensoren), auch als SiPM (Silicon Photomultiplier) bezeichnet, mit einer Photoempfindlichkeit im sichtbaren und nahen infraroten Spektralbereich allmählich die bisher eingesetzten Photomultiplier Tubes ab. Die von solchen Sensoren erzeugten Signale sind inhärent amplituden-nichtlinear, was ohne Range-Walk-Korrektur zu erheblichen amplitudenabhängigen Distanzfehlern führt.

SPM-Sensoren bestehen aus hunderten, tausenden, bis über zehntausenden von Mikrozellen und sind so in der Lage, Pulse mit tausenden oder hundertausenden von Photonen innerhalb Pico-Sekunden zu empfangen. Typischerweise werden SPM-Sensoren im Overbreak Modus (Geiger-Mode) betrieben und verhalten sich als analoge Sensoren. Beim Ansprechen einer Mikrozelle erzeugt diese einen einzelnen diskreten Spannungspuls, wobei sich das "analoge" Verhalten durch einen gemeinsamen Ausgang der Vielzahl an Mikrozellen ergibt, die jeweils einen gemeinsamen diskreten "digitalen" Spannungspuls liefern. Solche SPM-Sensoren werden oft auch als SPAD-Arrays bezeichnet.

Ein SPM-Sensor mit ausreichender Zellenzahl erfasst über einen grossen Dynamikbereich (typisch bis 1E8) die Empfangssignalamplitude und komprimiert gewissermassen die Eingangs-Amplitude von sehr kleinen bis sehr grossen Signalen. Der SPM-Sensor übersteuert dank einer exponentiellen Kennlinie nie, dies auch bei sehr grossen Signalen nicht, z.B. auch dann nicht, wenn die Strahlung von einem winkelpräzisen Retroreflektor zurückgeworfen wird. Bei einer vorgegebenen Photonenzahl nähert sich das Ausgangssignal des SPM-Sensors asymptotisch einer maximalen Grenzspannung, welche angepasst ist an die nachfolgende Verstärkerschaltung und garantiert, dass die nachfolgende Elektronik bis zur Zeitmessschaltung nicht übersteuert wird. Dadurch ist eine genaue Distanzmessung über einen hohen Dynamikbereich möglich.

Da diese SPM-Sensoren einen sehr weiten Amplitudenbereich von Empfangssignalen abdecken, braucht es für solche Empfängereinheiten einen Referenzlichtweg mit ausreichender Amplitudendynamik.

Bisherige Referenzlichtwege sind nicht in der Lage über den geforderten Dynamikbereich bzw. die erforderlichen Amplitudenbereiche dieser Empfangssensoren störungsfreie, insbesondere distanzgenaue Referenz-Empfangssignale bereitzustellen. Insbesondere können beispielsweise Signale mit kleinen oder solche mit grossen Amplituden deshalb auch mit Verwendung solcher SPM-Sensoren bisher nicht kalibriert werden, was in diesen Signalbereichen zu Messdistanzungenauigkeiten führt.

Die erfindungsgemässe Aufgabe besteht nun darin, ein verbessertes Messgerät bereitzustellen, das ausgehend von Empfangssignalen über einen vorgegebenen Dynamikbereich genaue Distanzwerte bestimmbar macht, indem aus Messungen über einen Referenzlichtweg Korrekturen bestimmt und verwendet werden, um systematische Fehler der Laufzeit und aus der Laufzeit ermittelte Distanzwerte zu kompensieren.

Die allgemeine erfindungsgemässe Aufgabe wird durch eine Vorrichtung mit den Merkmalen des Anspruches 1 gelöst. Die abhängigen Ansprüche beschreiben alternative Ausführungsvarianten, welche weitere Aufgaben lösen.

Die erfinderische Idee bezieht sich darauf, dass ein optischer Referenzkanal eines Vermessungsgeräts konfiguriert ist, um ein sogenannt "selbstleuchtendes" Referenzziel mit zeitlich und/oder örtlich variierender Intensität zu erzeugen, wobei das Vermessungsgerät ferner derart konfiguriert ist, dass der Empfangskanal, insbesondere repetitiv, über das selbstleuchtende Referenzziel streicht.

Selbstleuchtend bezieht sich hierbei darauf, dass sich die Referenzstrahlung in einem Abschnitt (ausserhalb des Distanzmessmoduls des Vermessungsgeräts) des Referenzkanals zwischen dem Referenzziel und einer Eintrittsoptik des Empfangskanals sogenannt "unidirektional" fortbewegt, d.h. wobei keine Umkehrung der Ausbreitungsrichtung der Referenzstrahlung erfolgt, wie dies beispielsweise bei Messgeräten aus dem Stand der Technik der Fall ist, welche einen Rotationsspiegel und ein reflektives in der Traverse des Messgerätes angeordnetes Referenzziel aufweisen.

Die Verwendung eines solchen sogenannt selbstleuchtenden Referenzziels hat den Vorteil, dass dadurch Abschwächungseinrichtungen zur Abschwächung der Referenzstrahlung einsetzbar werden, welche eine Strahlungsabschwächung über fünf oder mehr Grössenordnungen ermöglichen, beispielsweise transmissive Abschwächungseinrichtungen welche eine variable Einstellung von im Wesentlichen kompletter Transmission bis im Wesentlichen kompletter Strahlungsauslöschung bereitstellen. Beispielsweise können zeitlich schnell schaltbare Abschwächer verwendet werden, z.B. auf elektro-optischen oder spatialen Modulatoren basierende Abschwächer. Ferner kann die geforderte Signaldynamik auch über optische Elemente zur Erzeugung einer ortsabhängigen Strahldichte bereitgestellt werden, wobei die einsehbare Strahlstärke stark winkelabhängig ist, sodass mittels der Streichbewegung des Empfangskanals ein hoher Signaldynamikbereich abgefahren wird.

Das erfindungsgemässe Vermessungsgerät, insbesondere der Tachymeter, der Theodolit, der Laserscanner, der Profiler oder der Lasertracker, ermöglicht Distanzmessungen zu Objekten und umfasst ein Distanzmessmodul mit einem optischen Sendekanal und einem optischen Empfangskanal. Das Vermessungsgerät umfasst zudem einen Referenzlichtweg und eine Auswertungseinrichtung. Der optische Sendekanal umfasst eine Sendeeinheit zum Senden einer Lasermessstrahlung und ein optisches Auslasselement. Der optische Empfangskanal umfasst ein optisches Einlasselement und eine Empfangseinheit zum Empfangen von Lasermessstrahlung. Das Vermessungsgerät macht einen Messlichtweg erzeugbar, der sich ausserhalb des Distanzmessmoduls zwischen dem optischen Auslasselement und dem optischen Einlasselement zum Objekt und zurück erstreckt.

Der Referenzlichtweg weist eine vorgegebene Referenzdistanz auf, umfasst eine Abschwächungseinrichtung mit örtlich und/oder zeitlich variabler Abschwächung und ist so konfiguriert, dass er von der Sendeeinheit erzeugte Lasermessstrahlung über die Abschwächungseinrichtung zur Empfangseinheit leitet. Dabei ist der Referenzlichtweg so angelegt, dass er einen Anteil der Lasermessstrahlung der Sendeeinheit vor dem Erreichen des optischen Auslasselements aufnimmt, diesen Anteil ohne Kontakt zur Umgebung des Distanzmessmoduls zur Abschwächungseinrichtung führt und einen abgeschwächten Anteil anschliessend durch das optische Einlasselement zur Empfangseinheit weiterleitet, wobei die Empfangseinheit die zum Ableiten korrigierter Distanzwerte zu verwendenden Referenzsignale empfängt.

Die Auswertungseinrichtung ist zum Ableiten einer Distanz zum Objekt konfiguriert und verwendet dabei von der Empfangseinheit empfangene vom Objekt zurückkommende Lasermessstrahlung und von der Empfangseinheit empfangene über den Referenzlichtweg geführte Lasermessstrahlung. Intensitätsabhängige systematische Fehler werden beim Ableiten der Distanz zum Objekt zumindest teilweise kompensiert.

Mit der beschriebenen Ausbildung des Referenzlichtwegs können im Wesentlichen störungsfreie Empfangssignale des Referenzlichtwegs für wählbare Abschwächungen und entsprechend exakte Korrekturen der Distanzmesswerte erzielt werden. Die Aufnahme von Lasermessstrahlung in den Referenzlichtweg bevor diese Lasermessstrahlung durch das optische Auslasselement in die Umgebung des Distanzmessmoduls gelangt, stellt sicher, dass auf dem Weg zur Abschwächungseinrichtung keine parasitäre Strahlung entsteht.

Auf dem Referenzlichtweg ist der Zugangsbereich der Abschwächungseinrichtung nicht der Umgebung des Distanzmessmoduls zugewandt, sondern in einem Innenbereich des Vermessungsgerätes, bzw. des Distanzmessmoduls, angeordnet oder direkt an einen Lichtleiter angeschlossen. Darum ist diese Zugangsseite vor Verschmutzung geschützt und es kann kein parasitäres Streulicht in den Referenzlichtweg eingekoppelt werden, was die Entstehung von Störungen verhindert.

Die Amplitude des Referenzsignals, das zur Ermittlung einer Referenz-Lichtlaufzeit über den Referenzlichtweg von der Sendeeinheit zur Empfangseinheit gelangt, wird beim Durchgang durch die optische Abschwächungseinrichtung ohne Entstehung von Störungen lediglich mit einem der Abschwächungseinrichtung zugeordneten Abschwächungsfaktor abgeschwächt. Der erfinderische Referenzlichtweg stellt sehr schwache bis starke optische Signale bereit, welche alle dieselbe innerhalb von Picosekunden genaue Laufzeit aufweisen. Die Leistungen umfassen vorzugsweise einen Dynamikbereich von mindestens fünf oder mehr Grössenordnungen.

Ein abgeschwächter Anteil der Lasermessstrahlung gelangt nach der Abschwächungseinrichtung auf dem Referenzlichtweg durch das optische Einlasselement zur Empfangseinheit, welche die zum Ableiten korrigierter Distanzwerte zu verwendenden Referenzsignale empfängt. Der Referenzlichtweg führt durch dasselbe optische Einlasselement zur selben Empfangseinheit wie der Messlichtweg. Zumindest direkt vor dem optischen Einlasselement liegt ein Abschnitt des Referenzlichtwegs ausserhalb des Distanzmessmoduls des Vermessungsgerätes. In diesem Abschnitt ist die Lasermessstrahlung sowohl auf dem Messlichtweg als auch auf dem Referenzlichtweg als Freistrahl ausgebildet und der Durchgang durch das optische Einlasselement und das Empfangen durch die Empfangseinheit erzeugt für beide Lichtwege die gleichen systematischen Fehler.

Sowohl der Messlichtweg als auch der Referenzlichtweg gehen von der gleichen Sendeeinheit aus, aber das optische Auslasselement des optischen Sendekanals liegt nur auf dem Messlichtweg und nicht auf dem Referenzlichtweg. Es hat sich gezeigt, dass trotz dieses Unterschieds zwischen dem Messlichtweg und dem Referenzlichtweg die systematischen Fehler, die sich abhängig von der jeweiligen Amplitude auf diesen beiden Lichtwegen ergeben, im Wesentlichen gleich sind. Darum gewährleistet eine Korrektur der Messdistanz auf dem Messlichtweg anhand der Referenzmessung auf dem Referenzlichtweg einen exakten Wert für die Distanzmessung über den Messlichtweg.

Die erfindungsgemässe Lösung stellt sicher, dass auf dem Messlichtweg und auf dem Referenzlichtweg möglichst viele der nötigen optischen Elemente, welche zu systematischen Fehlern führen, die gleichen sind.

Direkt vor dem optischen Einlasselement liegt ein Abschnitt des Referenzlichtwegs ausserhalb des Distanzmessmoduls. Gemäss einer Ausführungsform ist zumindest in diesem Abschnitt der Referenzlichtweg unidirektional. Auf einem unidirektionalen Abschnitt des Referenzlichtweges bzw. auf einem gesamthaft unidirektionalen Referenzlichtweg kann unerwünscht entstehendes Streulicht, das sich in die entgegengesetzte Richtung auf dem Referenzlichtweg bewegt nicht zu einem Empfangssignal und somit auch nicht zu einem falschen Distanzwert führen. Auf einem unidirektionalen Referenzlichtweg bewegt sich die Lasermessstrahlung nur in einer Richtung und gelangt durch das optische Einlasselement des optischen Empfangskanals zur Empfangseinheit.

Von der Sendeeinheit erzeugte und dem Referenzlichtweg zugeführte Lasermessstrahlung wird im Distanzmessmodul auf einem am Vermessungsgerät fest angeordneten Abschnitt geführt ist und gelangt ausserhalb des Distanzmessmoduls auf einen relativ zum optischen Empfangskanal bewegten Abschnitt.

Bei einer Ausführungsform wird der Wechsel zwischen der Messung der Referenzdistanz über den Referenzlichtweg und einer Messung über einen Messlichtweg durch ein optisches Umlenkelement, beispielsweise einen rotierenden Spiegel, erzielt, wobei das Umlenkelement je phasenweise den Referenzlichtweg oder den Messlichtweg mit dem optischen Einlasselement verbindet bzw. diese Verbindung unterbricht.

Bei einem Messlichtweg gelangt die Lasermessstrahlung während einer Messphase von der Sendeeinheit durch das optische Auslasselement über dieses Umlenkelement zum Objekt und vom Objekt über dieses Umlenkelement durch das optische Einlasselement zur Empfangseinheit. Auf dem Referenzlichtweg gelangt die Lasermessstrahlung während einer Referenzphase von der Sendeeinheit durch die Abschwächungseinrichtung und anschliessend über dieses Umlenkelement durch das optische Einlasselement zur Empfangseinheit, ohne je von der Sendeeinheit her durch das optische Auslasselement auszutreten. Auf dem Referenzlichtweg trifft die Lasermessstrahlung nur einmal auf das Umlenkelement.

Während der Referenzphase überstreicht die Empfangseinheit die Lasermessstrahlung am Ende des Referenzlichtwegs. Sind die durch den Empfangskanal einsehbaren Strahlstärken der Lasermessstrahlung des Referenzlichtwegs stark von der Ausrichtung des optischen Umlenkelements, bzw. des rotierenden Spiegels abhängig, dann durchläuft das Referenzsignal in der Referenzphase beim Überstreichen der Abschwächeinheit den für die Range-Walk Kalibration geforderten Amplitudenbereich. Während dieser Phase werden mit einer Messrate im MHz-Bereich den Signalamplituden zugeordnete Distanzen bestimmt. Am Ende einer Referenzphase wird beispielsweise eine Korrekturtabelle erstellt, welche die Amplituden bezogenen Distanzoffsets bereitstellt.

Bei einer anderen Ausführungsform wird der Wechsel zwischen der Messung der Referenzdistanz über den Referenzlichtweg und einer Messung über einen Messlichtweg durch eine Relativbewegung zwischen einem ersten Geräteteil mit einem Abschnitt des Referenzlichtwegs und einem zweiten Geräteteil mit dem optischen Auslasselement und dem optischen Einlasselement erzielt. Der Abschnitt des Referenzlichtwegs des ersten Geräteteils ist so dem optischen Einlasselement zugeordnet, dass bei einer vorgegebenen Relativlage der beiden Geräteteile der Referenzlichtweg so auf das optische Einlasselement gerichtet ist, dass die Lasermessstrahlung beim Ende des Referenzlichtwegs durch das optische Einlasselement zur optischen Empfangseinheit gelangt.

In dieser vorgegebenen Relativlage ist beispielsweise der Messlichtweg vom optischen Auslasselement zum optischen Einlasselement zumindest teilweise unterbrochen, so dass Lasermessstrahlung vom Referenzlichtweg ohne Lasermessstrahlung vom Messlichtweg zur Empfangseinheit gelangt. Wenn die Geräteteile nicht in der vorgegebenen Relativlage sind, ist der Messlichtweg vom optischen Auslasselement zum optischen Einlasselement offen und es gelangt keine Lasermessstrahlung über den Referenzlichtweg zur Empfangseinheit.

Beispielsweise ist das zweite Geräteteil mit dem Sendekanal sowie dem optischen Auslasselement und dem Empfangskanal sowie dem optischen Einlasselement um eine Drehachse drehbar angeordnet und das Geräteteil mit dem Referenzlichtweg ist ortsfest mit Elementen radial ausserhalb des drehbaren Geräteteils ausgebildet. Der Referenzlichtweg umfasst auf der Drehachse eine optische Drehdurchführung, so dass Lasermessstrahlung ausgehend von der Sendeeinheit vor dem optischen Auslasselement zur Drehdurchführung und von dieser in eine Zuführlage zum optischen Einlasselement gebracht werden kann, wobei jeweils bei einer vorgegebenen Relativlage der beiden Geräteteile der Referenzlichtweg so auf das optische Einlasselement gerichtet ist, dass die Lasermessstrahlung beim Ende des Referenzlichtwegs durch das optische Einlasselement zur optischen Empfangseinheit gelangt. Auf dem Referenzlichtweg ist zumindest eine Abschwächungseinrichtung angeordnet.

Weil der Referenzlichtweg bei allen Ausführungsformen so angelegt ist, dass er einen Anteil der Lasermessstrahlung der Sendeeinheit vor dem Erreichen des optischen Auslasselements aufnimmt und diesen Anteil ohne Kontakt zur Umgebung des Vermessungsgerätes zur Abschwächungseinrichtung führt, wird gewährleistet, dass die Abschwächung nicht zu Störungen führt.

Die optische Abschwächungseinrichtung ist so aufgebaut, dass der ihr zugeordneten Abschwächungsfaktor verstellbar ist. Bei einzelnen Ausführungsformen wird die Verstellbarkeit zumindest teilweise dadurch erzielt, dass der Referenzlichtweg und zumindest ein Teil der Abschwächungseinrichtung relativ zueinander verstellbar sind, so dass der Referenzlichtweg über Bereiche der Abschwächungseinrichtung mit unterschiedlichen Abschwächungsfaktoren führt. Bei anderen Ausführungsformen ist der Abschwächungsfaktor verstellbar.

Die Abschwächungseinrichtung umfasst mindesten einen transmissiven und/oder mindestens einen reflexiven Abschwächungsbereich. Es können also reflektierende Elemente mit unterschiedlichen Reflexionsfaktoren und/oder transmissive Elemente mit unterschiedlichen Transmissionsfaktoren eingesetzt werden. Die von diesen Elementen gewährleistete Abschwächung kann mit DiffusorElementen, Hologramm-Elementen, diffraktiven optischen Elementen, Gitterelementen, Graufiltern, Graukeilen, streuenden Filmen, Verlaufsplatten oder Streuplatten erzielt werden. Dabei können auch richtungsabhängige Unterschiede der Strahlstärke zur Bereitstellung einer gewünschten Abschwächung verwendet werden.

Bekannte Abschwächungseinrichtung aus dem Stand der Technik umfassen beispielsweise ein mechanisch angetriebenes Graufilter mit einem Graukeilverlauf. Zur Einstellung einer gewünschten Abschwächung wird die Messsignal-Amplitude des Referenzsignals gemessen und der Graufilter bewegt, bis die Signalamplitude in einem gewünschten Bereich liegt. Es sind auch MEMS-basierte, Spiegel-basierte oder Blenden-basierte elektronisch bewegte Signalabschwächer (oft als VOA bezeichnet, variable optical attenuators) bekannt.

Weitere bekannte Abschwächer basieren beispielsweise auf elektro-optischen Abschwächern oder spatialen Modulatoren. Neben Vorrichtungen basierend auf Flüssigkristallen, können beispielsweise magneto-optische, halbleiterbasierte "Multiquantum Well" Anordnungen oder deformierbare Spiegel zur Verwendung als Abschwächer verwendet werden.

Einen Einsatz in kommerziellen Vermessungsinstrumenten haben bisher hauptsächlich Anordnungen basierend auf der Flüssigkristalltechnologie (Hersteller: Boulder Nonlinear Systems) und die MEMS-basierte Mikrospiegeltechnologie (Baugruppen aus dem Telekommbereich) gefunden.

Verglichen mit Flüssigkristallen sind feste optische Kristalle hinsichtlich Umgebungseinflüssen, insbesondere Temperatureinflüssen, um einiges robuster und können beispielsweise ohne faktische Funktionseinbusse über einen grossen Temperaturbereich, beispielsweise zwischen -20°C und 50°C, betrieben werden ohne dass dadurch ihre optischen Eigenschaften stark variieren. Zudem ist die Schaltgeschwindigkeit in optischen Kristallen um mehrere Grössenordnungen schneller als in Flüssigkristallen. Mit Festkörperkristallen lassen sich Einstellgeschwindigkeiten von weniger als 1000 ns erreichen, was mit Flüssigkristallen nicht erreichbar ist.

Insbesondere werden reflexive Abschwächungsbereiche der Abschwächungseinrichtung auf dem Referenzlichtweg und insbesondere bei ihrem Zugangsbereich nicht verschmutzt, weil der Referenzlichtweg Lasermessstrahlung vor dem Durchgang durch das optische Auslasselement aufnimmt und diese ohne Kontakt zur Umgebung des Vermessungsgerät bis zur Abschwächungseinrichtung bzw. bis zum reflexiven Abschwächungsbereich führt. Entsprechend ist der Zugangsbereich des Abschwächungselementes nicht in Kontakt zur Umgebung des Vermessungsgerätes und damit keiner Verschmutzung ausgesetzt. Die Reflektion der Lasermessstrahlung erfolgt nur an der dafür vorgesehenen Oberfläche und es entsteht kein parasitäres reflektiertes Licht mit einer anderen Laufzeit.

Bei vorteilhaften transmissiven Abschwächungsbereichen der Abschwächungseinrichtung kann der Zugangsbereich nicht verschmutzt werden und eine auf der Austrittsseite der Abschwächungsvorrichtung mögliche Verschmutzung schwächt die Lasermessstrahlung des Referenzlichtwegs nur zusätzlich etwas ab, erzeugt aber kein parasitäres Streulicht mit einer anderen Laufzeit. Die von einer Verschmutzung erzielbare Verschiebung des Dynamikbereichs ist eher klein und kann bei der Auslegung des Referenzlichtwegs berücksichtigt werden. Eine allfällige Verschmutzung ist nicht störend.

Die Amplitude des Referenzsignals, das zur Ermittlung einer Referenz-Lichtlaufzeit über den Referenzlichtweg von der Sendeeinheit zur Empfangseinheit gelangt, wird beim Durchgang durch die transmissive und/oder die reflexive optische Abschwächungseinrichtung mit einem dem Abschwächungseinrichtung zugeordneten Transmissionsfaktor respektive Reflexionsfaktor abgeschwächt. Die optische Abschwächungseinrichtung ist so aufgebaut, dass der ihr zugeordnete Transmissionsfaktor respektive Reflexionsfaktor verstellbar ist. Der jeweilige Faktor ist beispielsweise so verstellbar, dass der über den Referenzlichtweg bei der Empfangseinheit erzielbare Amplitudenbereich an den Amplitudenbereich der Messsignale für zu ermittelnde Distanzwerte angepasst ist.

Mit einer elektronisch verstellbaren transmissiven Abschwächungseinrichtung kann mit kleinem Aufwand ein grosser Abschwächungsbereich, bzw. eine grosse Dynamik, und insbesondere eine schnelle Verstellung der Abschwächung bereitgestellt werden. Den Durchlauf der Abschwächung kann beispielsweise in weniger als einer Millisekunde synchron zur Drehbewegung des rotierenden Ablenkspiegels erfolgen.

Messungen über den Referenzlichtweg werden in zeitlichen Abständen durchgeführt und die Abschwächung der Abschwächeinrichtung soll so variiert werden, dass die bei den Referenzmessungen auftretenden Amplituden des Referenzsignals möglichst über den gesamten Bereich der bei der Distanzmessung über den Messlichtweg auftretenden Amplituden verteilt sind. Gegebenenfalls werden Referenzmessungen mit über einen vorgegebenen maximalen Amplitudenbereich verteilten Amplituden des Referenzsignals durchgeführt. Es ist auch möglich einen benötigten Amplitudenbereich anhand der bei den Distanzmessungen über den Messlichtweg auftretenden Amplituden festzulegen. Bei der Kompensation von gemessenen Distanzwerten, wird jeweils die Referenzmessung verwendet, deren Amplitude am nächsten zur Amplitude der jeweiligen Distanzmessung liegt. Zudem wird jeweils eine Referenzmessung verwendet, die zeitlich möglichst nahe bei der zu korrigierenden Distanzmessung liegt.

Damit Referenzmessungen nicht durch Lasermessstrahlung für Messungen über den Messlichtweg beeinträchtigt werden, wird in einer weiteren Ausführungsform während der Referenzmessungen der Austritt der Lasermessstrahlung auf den Messlichtweg unterbrochen. Dazu umfasst das Vermessungsgerät beispielsweise steuerbare Strahlunterbrecher, gegebenenfalls mechanische Shutter oder LCD Shutter, welche die Lasermessstrahlung im geschlossenen Zustand vom Austritt auf den Messlichtweg abhalten.

Die Vermessungsgeräte messen eine Distanz mittels des Zeitunterschiedes zwischen dem Senden eines Lichtpulssignals und dem Empfangen des Lichtpulssignals nach dem Ablaufen des Messlichtwegs oder des Referenzlichtwegs. Die Information zum Sendezeitpunkt und zur Form des Lichtpulssignals kann über einen internen Vergleichspfad der Auswertungseinrichtung zugeführt werden und erlaubt zusammen mit dem empfangenen Lichtpulssignal die Bestimmung einer Laufzeit. Die Information zum Sendezeitpunkt kann auch über ein das Senden des Lichtpulssignals auslösendes Triggersignal bereitgestellt werden. Die Distanz wird dann aus dem Zeitunterschied zwischen dem Triggersignal und dem Empfangen des Lichtpulses nach dem Ablaufen des Messlichtwegs oder des Referenzlichtwegs bestimmt. Aus der Distanzmessung über den Referenzlichtweg und der bekannten Länge des Messlichtwegs kann eine Korrektur bestimmt werden, die den von der Amplitude abhängigen systematischen Fehler korrigiert.

Das erfindungsgemässe Vermessungsgerät wird nachfolgend anhand von in den Zeichnungen schematisch dargestellten Ausführungsbeispielen rein beispielhaft näher beschrieben. Gleiche und ähnliche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: eine perspektivische Darstellung eines 3D-Laserscanners beim Einsatz in einem Innenraum,
- Fig. 2:: einen Schnitt durch einen Laserscanner mit einem im Innern des Laserscanners als Freistrahl geführten unidirektionalen Referenzlichtweg,
- Fig. 3:: einen Schnitt durch einen Laserscanner mit einem anfänglich in einem Lichtleiter geführten Referenzlichtweg,
- Fig. 4:: eine perspektivische Darstellung ausgewählter Elemente eines Profilers,
- Fig. 5:: eine schematische Darstellung eines Abschnitts eines Referenzlichtwegs mit einem transmissiven Abschwächungselement,
- Fig. 6 und 7:: perspektivische Darstellungen transmissiver Abschwächungselemente in der Form eines Diffusors,
- Fig. 8:: eine schematische Darstellung eines Abschnitts eines Referenzlichtwegs mit einem transmissiven Abschwächungselement in der Form eines Filters mit Keilverlauf, und
- Fig. 9:: eine schematische Darstellung eines Abschnitts eines Referenzlichtwegs mit einer Abschwächungseinrichtung mit einem reflexiven und einem transmissiven Abschwächungselement.

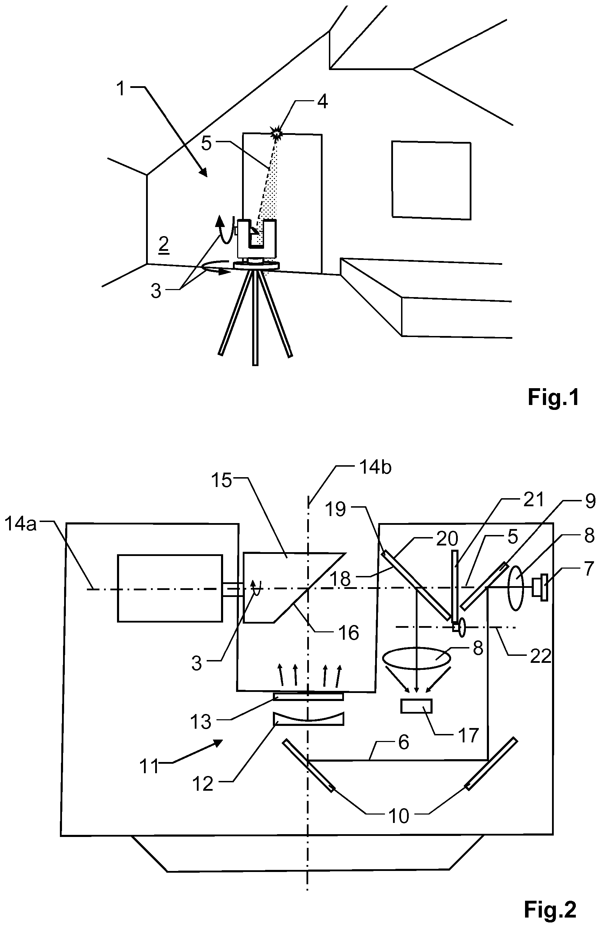

**Figur 1** zeigt ein Vermessungsgerät 1 in der Form eines 3D-Laserscanners beim Einsatz in einem Innenraum 2. Der dargestellte Laserscanner kann den Lasermessstrahl mit Drehungen von Teilen des Laserscanners um zwei Drehachsen in jede gewünschte Messrichtung ausrichten. Die Drehungen um diese Drehachsen sind mit den Pfeilen 3 visualisiert. Die mit einem Kreis 4 markierte Stelle eines Türrahmens reflektiert den Lasermessstrahl auf dem Messlichtweg 5 mit hoher Intensität und weist darauf hin, dass die Intensität des Empfangssignals sehr grosse Schwankungen aufweisen kann.

Oberflächen von Wänden und Decken sind in der Regel diffus streuend und erzeugen eher schwache bis mittlere Empfangssignalamplituden in der Empfangseinheit eines Laserscanners. Spiegelnde Objekte wie Fenster und Rohre erzeugen Rückreflexe, welche einen Amplitudenbereich von mehreren Grössenordnungen umfassen. Um Punktwolken mit hoher Qualität von Objektoberflächen zu erzeugen braucht es Vermessungsgeräte mit Distanzmessmodulen, welche bei möglichst allen auftretenden Signalamplituden Millimeter genaue Distanzmessung liefern.

**Figur 2** zeigt anhand eines Vermessungsgerätes 1 in der Form eines Laserscanners schematisch ein Beispiel zur Führung der Lasermessstrahlung auf dem Messlichtweg 5 und auf dem Referenzlichtweg 6. Der Laserscanner umfasst einen optischen Sendekanal mit einer Sendeeinheit 7 zum Senden einer Lasermessstrahlung. In der dargestellten Ausführungsform gelangt die Lasermessstrahlung im Innern des Laserscanners durch ein Kollimator-Objektiv 8 zu einem Strahlteiler 9. Der Stahlteiler 9 leitet einen Anteil (<10%) der Lasermessstrahlung im Innern des Laserscanners auf dem Referenzlichtweg 6 weiter. Über Spiegel 10 gelangt Lasermessstrahlung im Innern des Laserscanners auf dem Referenzlichtweg 6 zu einer im Innern des Laserscanners angeordneten Abschwächungseinrichtung 11.

In der dargestellten Ausführungsform umfasst die Abschwächungseinrichtung 11 eine räumliche Strahlaufweitung in Form einer negativ Linse 12 und eine Lichtmisch- und Strahlumformeinheit in Form eines Diffusors 13. Nach dem Durchtritt der Lasermessstrahlung durch den Diffusor 13 tritt die Lasermessstrahlung aus dem Innern des Laserscanners aus und trifft bei entsprechender Drehausrichtung eines um eine erste Achse 14a drehenden Spiegelelementes 15 auf dessen um 45° zur ersten Achse 14a geneigte Spiegelfläche 16. Von der Spiegelfläche 16 wird die Lasermessstrahlung gegen einen optischen Empfangskanal mit einer Empfangseinheit 17 zum Empfangen von Lasermessstrahlung geleitet. Beim Eintritt in das Innere des Laserscanners gelangt die von der Spiegelfläche 16 kommende Lasermessstrahlung zu einem optischen Einlasselement 18 in der Form einer reflektierenden Oberfläche eines Trennelementes 19 beispielsweise in Form eines dielektrischen Strahlteilers und von dieser partiell reflektierenden Oberfläche durch ein Kollimator-Objektiv 8 zur Empfangseinheit 17.

Das Vermessungsgerät 1 macht einen Messlichtweg 5 erzeugbar, der sich ausserhalb des Vermessungsgerätes 1, bzw. dessen Distanzmessmoduls, zwischen einem optischen Auslasselement 20 und dem optischen Einlasselement 18 zum Objekt und zurück erstreckt. Das optische Auslasselement 20 ist in der dargestellten Ausführungsform eine von der Sendeeinheit 7 her laserlichtdurchlässige Oberfläche des Trennelementes 19. Das Trennelement 19 lenkt somit Lasermessstrahlung, die von der Spiegelfläche 16 her kommt gegen die Empfangseinheit 17 und lässt auf dem Messlichtweg 5 Lasermessstrahlung gegen die Spiegelfläche 16 hin aus dem Innern des Vermessungsgerätes 1 austreten. Das Trennelement 19 kann als zonal strukturierter dielektrischer Strahlteiler ausgelegt sein, wobei in der Mitte eine Kreisfläche eine optisches Transmissions- zu Reflexionsverhältnis von T:R=0.8:0.2 und ausserhalb dieses Kreises bis hin zum Rand ein Verhältnis von T:R=1.0:0.0 aufweist.

Bei der Drehung der Spiegelfläche 16 um die erste Achse 14a werden Distanzwerte in einer Ebene über einen grossen Winkelbereich erfassbar. Durch die Möglichkeit der Drehung des Laserscanners um eine zur ersten Achse 14a senkrechte zweite Achse 14b können Distanzwerte in Ebenen erfasst werden, die um die zweite Achse 14b zueinander verdreht sind.

Der Referenzlichtweg 6 ist so konfiguriert, dass er von der Sendeeinheit 7 erzeugte Lasermessstrahlung über die Abschwächungseinrichtung 11 zur Empfangseinheit 17 leitet. Dabei ist der Referenzlichtweg 6 so angelegt, dass er einen Anteil der Lasermessstrahlung der Sendeeinheit 7 vor dem Erreichen des optischen Auslasselements 20 aufnimmt, diesen Anteil ohne Kontakt zur Umgebung des Vermessungsgerätes 1 zur Abschwächungseinrichtung 11 führt und einen abgeschwächten Anteil anschliessend durch das optische Einlasselement 18 zur Empfangseinheit 17 weiterleitet, wobei die Empfangseinheit 17 die zum Ableiten korrigierter Distanzwerte zu verwendenden Referenzsignale empfängt. Alle möglichen Strahlengänge, unabhängig vom Abschwächungsgrad innerhalb des Referenzlichtwegs 6 weisen dabei dieselbe Weglänge auf. So wird sichergestellt, dass die jeweils erfassten Distanzen jeweils identisch sind.

Während zeitlichen Phasen, in denen Lasermessstrahlung über den Referenzlichtweg von der Spiegelfläche 16 her über das optische Einlasselement 18 zur Empfangseinheit 17 gelangt, würde Lasermesslicht, das durch das optische Auslasselement 20 und über die Spiegelfläche 16 gegen die Abschwächungseinrichtung 11 geleitet wird, gegebenenfalls vom Diffusor 13 oder einem Abschluss des Laserscanners bei der Abschwächungseinrichtung 11 zumindest mit einem kleinen Intensitätsanteil reflektiert und über die Spiegelfläche 16 und das optische Einlasselement 18 der Empfangseinheit 17 zugeführt. So könnte die Referenzmessung gegebenenfalls von unerwünschten Lichtanteilen beeinträchtigt werden.

Um dies zu vermeiden umfasst eine spezifische Ausführungsform beispielsweise ein Unterbrecherelement 21, das während Referenzmessungen den Messlichtweg so unterbricht, dass keine Lasermessstrahlung durch das optische Auslasselement 20 zur Spiegelfläche 16 gelangt. Das Unterbrecherelement 21 kann beispielsweise als Abdeckscheibe oder Chopperrad ausgebildet werden, die/das um eine dritte Achse 22 drehbar angeordnet ist, wobei sie so synchron mit dem Spiegelelement 15 angetrieben wird, dass Sie den Messlichtweg 5 abdeckt bzw. unterbricht, wenn die Spiegelfläche 16 den Referenzlichtweg von der Abschwächungseinrichtung 11 zum optische Einlasselement 18 ausbildet. Es versteht sich von selbst, dass anstelle eines drehenden Chopperrads auch ein Element mit verstellbarem Transmissionsfaktor einsetzbar ist. Während Distanzmessungen gibt das Unterbrecherelement 21 den Messlichtweg 5 frei, bzw. die Unterbrechung wird aufgehoben.

Anstelle eines Unterbrecherelements 21 kann die Austrittsöffnung des Referenzpfads beim Diffusor 13 exzentrisch zum axialen externen Sendestrahl 5 angeordnet sein. So wird sichergestellt, dass der externe Sendestrahl 5 bei jeder Stellung des rotierenden Spiegels 16 keine störenden Lichtanteile auf den Referenzpfad einspiegelt.

Eine nicht dargestellte Auswertungseinrichtung ist zum Ableiten einer Distanz zu einem Objekt konfiguriert und verwendet dabei mit der Empfangseinheit 17 empfangene vom Objekt zurückkommende Lasermessstrahlung und mit der Empfangseinheit empfangene über den Referenzlichtweg geführte Lasermessstrahlung sowie die Referenzdistanz. Intensitätsabhängige systematische Fehler werden beim Ableiten der Distanz zum Objekt zumindest teilweise in Echtzeit kompensiert.

Damit der Referenzlichtweg 6 exakte Korrekturen der Distanzmesswerte ermöglicht, ist die Abschwächungseinrichtung 11 so ausgebildet, dass Referenzmessungen mit verschiedenen Abschwächungen durchführbar sind. In der auf Fig. 2 dargestellten Ausführungsform ist gegebenenfalls beim optischen Diffusor 13 die Stärke der Diffusion, bzw. ein Diffusionsfaktor, verstellbar ausgebildet. Es ist auch möglich, dass der Diffusor 13 senkrecht zur Darstellungsebene der Fig. 2 Bereiche mit unterschiedlich starker Streuwirkung, umfasst, so dass über einen vorgegebenen Drehbereich des Spiegelelementes 15 Referenzmessungen mit unterschiedlichen Abschwächungen durchgeführt werden. Vorzugsweise werden Diffusoren eingesetzt, welche die Lichtstreuung an lediglich einer der beiden Oberflächen einer Streuscheibe (Oberflächenstreuscheibe) erzeugt, und nicht im Inneren einer Glasmatrix (Volumenstreuscheibe) erfolgt. Zudem soll die Streuscheibe so ausgelegt sein, dass die chromatische Charakteristik der einfallenden Strahlung unverändert bleibt.

Auf dem Referenzlichtweg 6 ist der Zugangsbereich der Abschwächungseinrichtung 11 nicht der Umgebung des Vermessungsgerätes 1 zugewandt, sondern in einem Innenbereich des Vermessungsgerätes 1 angeordnet. Darum ist diese Zugangsseite vor Verschmutzung geschützt und es kann kein parasitäres Streulicht in den Referenzlichtweg eingekoppelt werden, was die Entstehung von Störungen verhindert. Die Amplitude des Referenzsignals, das zur Ermittlung einer Referenz-Lichtlaufzeit über den Referenzlichtweg 6 von der Sendeeinheit 7 zur Empfangseinheit 17 gelangt, wird beim Durchgang durch die optische Abschwächungseinrichtung 11 ohne Entstehung von Störungen lediglich mit einem der Abschwächungseinrichtung 11 zugeordneten Abschwächungsfaktor abgeschwächt. Zudem bleibt die Referenzlichtlaufzeit für alle Strahlanteile auf dem Referenzlichtweg unverändert.

Ein abgeschwächter Anteil der Lasermessstrahlung gelangt nach der Abschwächungseinrichtung auf dem Referenzlichtweg 6 durch das optische Einlasselement 18 zur Empfangseinheit 17, welche die zum Ableiten korrigierter Distanzwerte zu verwendenden Referenzsignale empfängt. Der Referenzlichtweg 6 führt durch dasselbe optische Einlasselement 18 zur selben Empfangseinheit 17 wie der Messlichtweg 5. Zumindest direkt vor dem optischen Einlasselement 18 liegt ein Abschnitt des Referenzlichtwegs 6 ausserhalb des Distanzmessmoduls des Vermessungsgerätes 1. In diesem Abschnitt ist die Lasermessstrahlung sowohl auf dem Messlichtweg 5 als auch auf dem Referenzlichtweg 6 als Freistrahl ausgebildet und der Durchgang durch das optische Einlasselement 18 und das Empfangen durch die Empfangseinheit 17 erzeugt für beide Lichtwege 5, 6 die gleichen systematischen Fehler.

Sowohl der Messlichtweg 5 als auch der Referenzlichtweg 6 gehen von der gleichen Sendeeinheit 7 aus, aber das optische Auslasselement 20 des optischen Sendekanals liegt nur auf dem Messlichtweg 5 und nicht auf dem Referenzlichtweg 6. Es hat sich gezeigt, dass trotz dieses Unterschieds zwischen dem Messlichtweg 5 und dem Referenzlichtweg 6 die systematischen Fehler, die sich abhängig von der jeweiligen Amplitude auf diesen beiden Lichtwegen ergeben, im Wesentlichen gleich sind. Darum gewährleistet eine Korrektur der Messdistanz auf dem Messlichtweg 5 anhand der Referenzmessung auf dem Referenzlichtweg 6 einen exakten Wert für die Distanzmessung über den Messlichtweg 5.

Die dargestellte Lösung stellt sicher, dass auf dem Messlichtweg 5 und auf dem Referenzlichtweg 6 möglichst viele der notwendigen optischen und insbesondere elektronischen Elemente, welche zu systematischen Fehlern führen, die gleichen sind.

Der Referenzlichtweg 6 ist in der dargestellten Ausführungsform unidirektional. Auf einem unidirektionalen Referenzlichtweg 6 kann unerwünscht entstehendes Streulicht, das sich in die entgegengesetzte Richtung auf dem Referenzlichtweg 6 propagiert nicht zu einem Empfangssignal und somit auch nicht zu einem falschen Distanzwert führen. Der unidirektionale Referenzlichtweg 6 ist so ausgelegt, dass ausschliesslich Laserstrahlung empfangen werden kann, welche sich in Vorwärtsrichtung ausbreitet. Die Lasermessstrahlung gelangt dabei unidirektional von der Abschwächeinrichtung durch das optische Einlasselement 18 des optischen Empfangskanals zur Empfangseinheit 17.

Bei der in Fig. 2 dargestellten Ausführungsform wird der Wechsel zwischen der Messung der Referenzdistanz über einen Referenzlichtweg 6 und einer Messung über den Messlichtweg 5 durch eine rotierende Spiegelfläche 16 erzielt, wobei die Spiegelfläche 16 je phasenweise den Referenzlichtweg 6 oder den Messlichtweg 5 mit dem optischen Einlasselement 18 verbindet. Der Winkelbereich dar Kalibrierphase ist in Richtung Nadir orientiert und umfasst typisch 30 Grad des Drehbereichs der ersten Achse 14a.

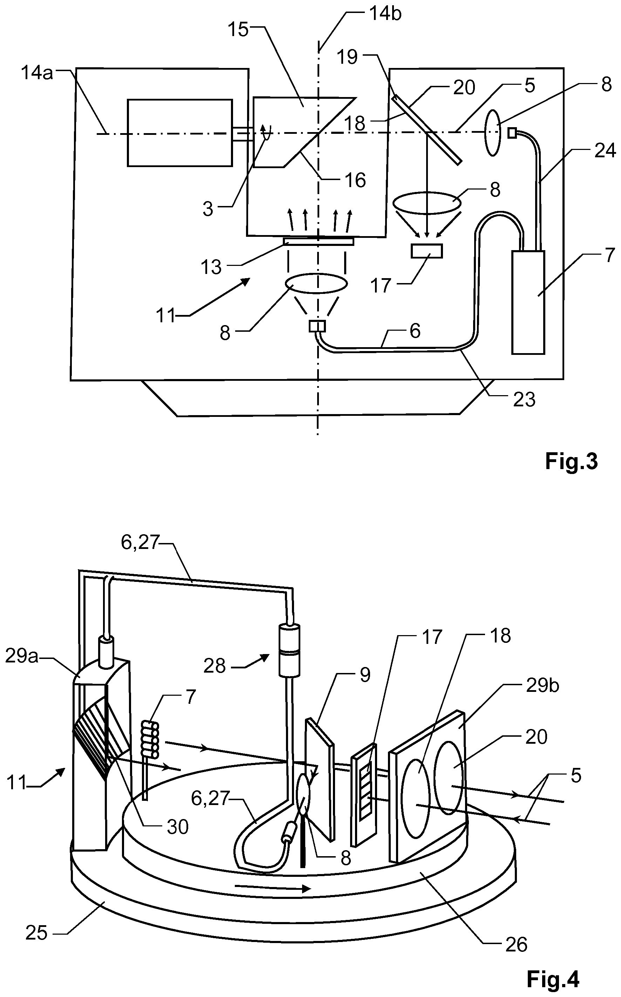

**Figur 3** zeigt eine ähnliche Ausführung wie Figur 2, wobei Abschnitte des Referenzlichtwegs 6 und des Messlichtwegs 5 nicht mehr als Freistrahlen sondern mit Lichtleitern ausgebildet sind. Für die bereits anhand der Figur 2 beschriebenen Elemente gilt die oben stehende Beschreibung. Lediglich die geänderten Teile werden anhand der Figur 3 beschrieben. Die Sendeeinheit 7 speist einen ersten Lichtleiter 23 und einen zweiten Lichtleiter 24. Der erste Lichtleiter 23 bildet einen Abschnitt des Referenzlichtweges 6 und der zweite Lichtleiter 24 einen Abschnitt des Messlichtweges 5. An den von der Sendeeinheit 7 abgewandten Enden der Lichtleiter 23, 24 ist je beim Übergang zum Freistrahl ein Kollimator-Objektiv 8 angeordnet. Um räumliche und zeitliche Laufzeitfehler minimal zu halten, werden senderseitig vorzugsweise optische Monomode-Lichtleiter verwendet. Diese haben zudem den Vorteil wellentheoretisch kleinstmögliche Messlichtflecke an den zu vermessenden Objekten zu erzeugen.

In einer weiteren Ausführungsform umfasst die Sendeeinheit 7 einen elektronisch steuerbaren Demultiplexer oder faseroptischen Strahlteiler, welche bei Messungen über den Referenzlichtweg 6 also bei Stellungen der Spiegelfläche 16, welche Lasermessstrahlung auf dem Referenzweg 6 zur Empfangseinheit 17 führen, nur den ersten Lichtleiter 23 mit Lasermessstrahlung speist. Wenn der zweite Lichtleiter 24 während der Referenzmessungen nicht mit Lasermessstrahlung versorgt wird, können Störungen wie optisches Übersprechen (Crosstalk) vermieden werden.

**Figur 4** zeigt ein Vermessungsgerät 1 in der Form eines mehrstrahligen Laserprofilers mit einem ersten Geräteteil 25, das einen Abschnitt des Referenzlichtwegs 6 umfasst und mit einem zweiten Geräteteil 26, welches das optische Auslasselement 20 und das optische Einlasselement 18 umfasst. Das zweite Geräteteil 26 ist relativ zum ersten Geräteteil 25 um eine zentrale Drehachse drehbar und weist ein nur teilweise beim optischen Auslasselement 20 und beim optischen Einlasselement 18 dargestelltes zweites Gehäuse 29b des zweiten Geräteteils 26 auf. Während jeder Drehung trifft ein vom ersten Geräteteil 25 gegen das zweite Geräteteil 26 gerichteter Abschnitt des Referenzlichtwegs 6 auf das optische Einlasselement 18 und ermöglicht dann eine Messung über den Referenzlichtweg 6. In allen anderen Drehausrichtungen können Messungen zu externen Oberflächen über den Messlichtweg 5 durchgeführt werden.

Der Profiler umfasst einen optischen Sendekanal mit einer Sendeeinheit 7 zum Senden einer Lasermessstrahlung. In der dargestellten Ausführungsform ist die Sendeeinheit 7 konfiguriert zum Erzeugen einer Vielzahl von Sendekanälen zum Aussenden von modulierten, insbesondere gepulsten Distanzmessstrahlen. Die Sendekanäle machen unterschiedliche Elevationen abtastbar, wobei die Elevationen auf die zentrale Drehachse bezogen sind. Um die von den Sendekanälen ausgesandte Lasermessstrahlen mit entsprechenden Empfangskanälen empfangen zu können, ist die Empfangseinheit 17 als mehrkanaliger Empfänger, beispielsweise als Photodiodenarray, APD-Array oder Array von SPAD-Arrays ausgebildet.

Die Lasermessstrahlung mindestens eines Sendekanals gelangt im Innern des Gehäuses des zweiten Geräteteils 26 über einen Strahlteiler 9 und eine Linse 8 in einen Verbindungslichtleiter 27, der als Teil des Referenzlichtwegs 6 die aufgenommene Lasermessstrahlung über eine optische Drehkupplung 28 vom drehbaren zweiten Geräteteil 26 zum ersten Geräteteil 25 führt. Der Stahlteiler 9 ist beispielsweise so ausgebildet und angeordnet, dass er die Lasermessstrahlung eines Sendekanals zum Verbindungslichtleiter 27 umlenkt. Der Stahlteiler 9 kann aber auch dielektrisch oder metallisch beschichtet sein und von allen Sendekanälen je 1% des Sendelichts auf die Linse 8 umlenken. Zusätzlich kann vor der Linse 8 auch noch ein diffraktives Lichtmischelement platziert sein, damit jede Sendeeinheit im statistischen Mittel gleich viel zum Referenzsignalpfad beiträgt. In diesem Fall ist der Verbindungslichtleiter 27 ein Multimode-Lichtleiter, vorzugsweise eine Gradientenindexfaser. Am Ende des Verbindungslichtleiters 27 gelangt Lasermessstrahlung im Innern eines ersten Gehäuses 29a des ersten Geräteteils 25 zu einer Abschwächungseinrichtung 11.

In der dargestellten Ausführungsform umfasst die Abschwächungseinrichtung 11 einen Abschwächungsspiegel 30 mit unterschiedlichen, beispielswese in Segmentform angeordneten, Reflexionsgraden. Die Bereiche können spiegelnd, weiss diffus streuend und schwarz matt streuend verteilt sein. Der Abschwächungsspiegel 30 leitet Lasermessstrahlung von den Bereichen mit unterschiedlichen Reflexionsgraden gegen den zweiten Geräteteil 26. Wenn das optische Einlasselement 18 der vom Abschwächungsspiegel 30 weitergeleiteten Lasermessstrahlung von den Bereichen mit unterschiedlichen Reflexionsgraden zugeordnet ist, können die Referenzmessungen mit den entsprechenden unterschiedlichen Intensitäten der Lasermessstrahlung durchgeführt werden.

Das Vermessungsgerät 1 der Figur 4 macht einen, bzw. pro Sendekanal einen, Messlichtweg 5 erzeugbar, der sich von der Sendeeinheit 7 durch den Strahlteiler 9 zum Auslasselement 20 und ausserhalb des Distanzmessmoduls des Vermessungsgerätes 1 zwischen dem optischen Auslasselement 20 und dem optischen Einlasselement 18 zum zu scannenden Objekt und zurück erstreckt. Das optische Auslasselement 20 ist in der dargestellten Ausführungsform in Umfangsrichtung des zweiten Geräteteils 26 zum Einlasselement 18 biaxial versetzt. Dies hat den Vorteil, dass beim mehrstrahligen Laserprofiler der Crosstalk zwischen gleichzeitig aktivierten Sendekanälen minimal wird. Des Weiteren kann die Biaxialität zwischen Auslasselement 20 und Einlasselement 18 genutzt werden zur Unterbrechung der externen Lichtkanäle 5 während der zeitlichen Phase, wo die Empfangseinheit Licht über den Referenzlichtpfad empfängt. Steht der zweite Geräteteil 26 in diesem Winkelbereich, dann unterbricht die Abschwächeinheit 11 die von einem externen Zielobjekt rückreflektierte Strahlung zum Einlasselement 18. Dadurch wird ausschliesslich und ohne Störung Lasermessstrahlung über den Referenzlichtweg 6 zur Empfangseinheit 17 geleitet.

Der Referenzlichtweg 6 ist so konfiguriert, dass er einen Anteil der Lasermessstrahlung der Sendeeinheit 7 vor dem Erreichen des optischen Auslasselements 20 aufnimmt, diesen Anteil ohne Kontakt zur Umgebung des Vermessungsgerätes 1 zur Abschwächungseinrichtung 11 führt und einen abgeschwächten Anteil anschliessend durch das optische Einlasselement 18 zur Empfangseinheit 17 weiterleitet, wobei die Empfangseinheit 17 die zum Ableiten korrigierter Distanzwerte zu verwendenden Referenzsignale empfängt.

Wenn das zweite Geräteteil 26 so ausgerichtet ist, dass Referenzmessungen durchführbar sind, unterbricht das erste Gehäuse 29a des ersten Geräteteils 25 bzw. die darin angeordnete Abschwächungseinrichtung 11 den Messlichtweg 5 mindestens eines Sendekanals, so dass zumindest für diesen Sendekanal in der entsprechenden Richtung keine Distanzmessungen möglich sind. Mittels den Referenzmessungen und den daraus abgeleiteten amplitudenreferenzierten systematischen Fehlern (Distanzoffsets) wird die Range-Walk Tabelle aktualisiert. Die Einträge dieser Range-Walk Tabelle werden verwendet für die Korrektur der ermittelten Rohdistanzwerten aus den Laufzeitmessungen zu den Zielobjekten.

Eine nicht dargestellte Auswertungseinrichtung ist zum Ableiten einer Distanz zu einem Objekt konfiguriert und verwendet dabei mit der Empfangseinheit 17 empfangene vom Objekt zurückkommende Lasermessstrahlung und mit der Empfangseinheit 17 empfangene über den Referenzlichtweg 6 geführte Lasermessstrahlung sowie die Referenzdistanz. Intensitätsabhängige systematische Fehler werden beim Ableiten der Distanz zum Objekt zumindest teilweise kompensiert.

Der Referenzlichtweg 6 ist in der in Figur 4 dargestellten Ausführungsform unidirektional. Auf dem Referenzlichtweg 6 ist der Zugang zur Abschwächungseinrichtung 11 von der Sendeeinheit 7 nicht der Umgebung des Vermessungsgerätes 1 zugewandt, sondern in Innenbereichen des ersten und des zweiten Gehäuses 29a, 29b angeordnet. Darum ist dieser Zugang vor Verschmutzung geschützt und es kann kein parasitäres Streulicht in den Referenzlichtweg eingekoppelt werden, was die Entstehung von Störungen verhindert.

Ein abgeschwächter Anteil der Lasermessstrahlung gelangt nach der Abschwächungseinrichtung 11 auf dem Referenzlichtweg 6 durch das optische Einlasselement 18 zur Empfangseinheit 17, welche die zum Ableiten korrigierter Distanzwerte zu verwendenden Referenzsignale empfängt. Der Referenzlichtweg 6 führt durch dasselbe optische Einlasselement 18 zur selben Empfangseinheit 17 wie der Messlichtweg 5. Zumindest direkt vor dem optischen Einlasselement 18 liegt ein Abschnitt des Referenzlichtwegs 6 ausserhalb des zweiten Gehäuses 29b. In diesem Abschnitt ist die Lasermessstrahlung sowohl auf dem Messlichtweg 5 als auch auf dem Referenzlichtweg 6 als Freistrahl ausgebildet und der Durchgang durch das optische Einlasselement 18 und das Empfangen durch die Empfangseinheit 17 erzeugt für beide Lichtwege 5, 6 die gleichen systematischen Fehler.

Sowohl der Messlichtweg 5 als auch der Referenzlichtweg 6 gehen von der gleichen Sendeeinheit 7 aus, aber das optische Auslasselement 20 des optischen Sendekanals liegt nur auf dem Messlichtweg 5 und nicht auf dem Referenzlichtweg 6. Es hat sich gezeigt, dass trotz dieses Unterschieds zwischen dem Messlichtweg 5 und dem Referenzlichtweg 6 die systematischen Fehler, die sich abhängig von der jeweiligen Amplitude auf diesen beiden Lichtwegen ergeben, im Wesentlichen gleich sind. Darum gewährleistet eine Korrektur der Messdistanz auf dem Messlichtweg 5 anhand der Referenzmessung auf dem Referenzlichtweg 6 einen exakten Wert für die Distanzmessung über den Messlichtweg 5.

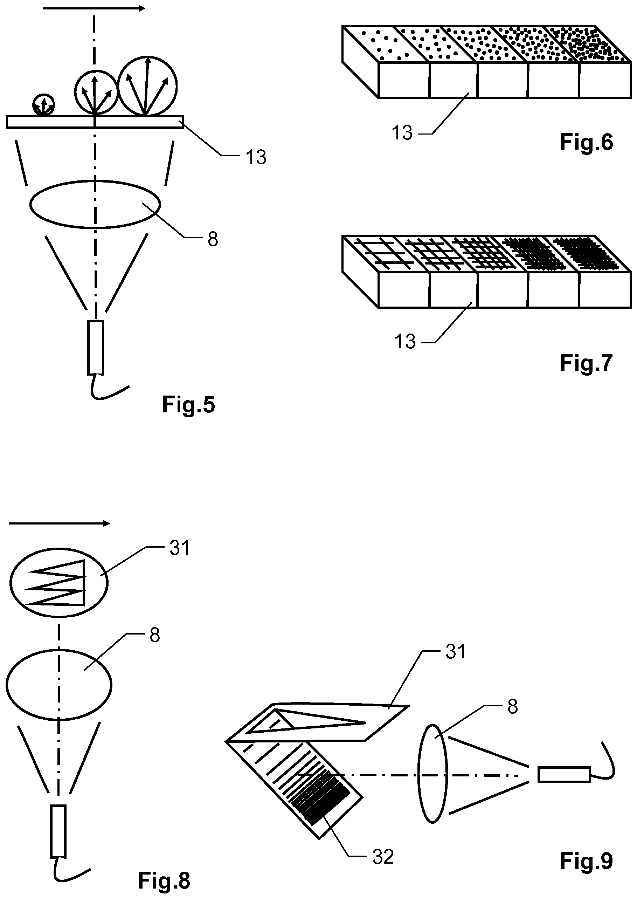

**Figur 5** zeigt eine Abschwächungseinrichtung 11 bei der Lasermesstrahlung durch eine Kollimator-Optik 8 und einen Diffusor mit sich in einer Ausdehnungsrichtung des Diffusors ändernder Diffusionsstärke. Entsprechend nimmt die Strahldichte oder Intensität der Lasermessstrahlung nach dem Diffusor in einer mit dem Pfeil dargestellten Richtung zu. Überstreicht nun während der Referenzphase der rotierende Empfangskanal die Abschwächungseinrichtung 11, insbesondere den Diffusor mit örtlich abnehmender Strahldichte, dann wird eine Serie von Distanzmessungen mit sich ändernden Signalstärken über einen grossen Dynamikbereich erfasst. Die dabei ermittelten Distanzen erfassen ausschliesslich den intensitätsabhängigen Distanzfehler, da das Referenzpfadlicht frei von parasitärer Streustrahlung ist. Vergleichbar zu den Vorrichtungen in Figur 2 und 3 sind die durch den Empfangskanal einsehbaren Strahlstärken des Referenzlichtbündels winkelabhängig, so wird bei einer Rotation des zweiten Geräteteils 26 Empfangsimpulse mit unterschiedlichen Signalamplituden von ganz schwach bis zur Übersteuerung gemessen.

Die **Figuren 6 und 7** zeigen Diffusoren 13 in der Form von segmentierten Diffusorplatten, die als transmissive Abschwächungselemente eingesetzt werden können. Die auf Fig. 6 dargestellten unterschiedlich feinen bzw. groben Strukturen der Segmente der Diffusorplatten bewirken bei durchtretender Laserstrahlung unterschiedliche Streuwinkel oder Beugungswinkel. Dabei wird darauf geachtet, dass die Lichtstreuung ausschliesslich an einer einzigen Oberfläche der Diffusorplatten auftreten. Bekannte Diffusorplatten sind als diffraktive optische Elemente (DOE) oder als Mattscheiben mit einer ortsabhängigen Rauhigkeit bekannt.

Das ortsabhängige Streuvermögen kann in Segmenten oder als kontinuierlichen Verlauf realisiert sein. Fig. 7 zeigt einen Diffusor 13 in der Form einer Strahlaufweitungsplatte mit unterschiedlichen Gitterstrukturen, die durch Beugung und/oder Lichtblockung zu unterschiedlichen ortsabhängigen Transmissionsfaktoren führen. Die Gitterstrukturen sind auch hier lediglich auf einer Oberfläche angeordnet. Auch sind absorbierende Filterschichten mit einem exponentiellen Absorptionsverlauf möglich.

Die **Figuren 8 und 9** zeigen Abschwächungselemente ohne Diffusorplatten. Gemäss Fig. 8 gelangt die Lasermessstrahlung durch eine Kollimator-Optik 8 und eine als Filter wirkende Maske 31 mit Durchlassöffnungen. Die Breite der Durchlassöffnungen nimmt in einer mit dem Pfeil angezeigten Richtung zu, wobei in dieser Richtung auch die Intensität der durchtretenden Lasermessstrahlung zunimmt. Gemäss Fig. 9 gelangt die Lasermessstrahlung durch eine Kollimator-Optik 8, über einen Spiegel 32 mit unterschiedlicher Reflexivität und durch eine als Apertur wirkende Maske 31. Die Reflexivität und die Breite der Durchlassöffnungen ändern in einer Richtung so, dass die Intensität von Lasermessstrahlung in der mit dem Pfeil angezeigten Richtung zunimmt.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vermessungsgerät (1), insbesondere Tachymeter, Theodolit, Laserscanner, Profiler oder Lasertracker, zum Durchführen von Distanzmessungen zu einem Objekt mit einem Distanzmessmodul, das einen optischen Sendekanal und einen optischen Empfangskanal umfasst, mit einem Referenzlichtweg (6) und mit einer Auswertungseinrichtung, wobei
der optische Sendekanal eine Sendeeinheit (7) zum Senden einer Lasermessstrahlung und ein optisches Auslasselement (20) umfasst,
der optische Empfangskanal ein optisches Einlasselement (18) und eine Empfangseinheit (17) zum Empfangen von Lasermessstrahlung umfasst,
das Vermessungsgerät (1) einen Messlichtweg (5) ausserhalb des Distanzmessmoduls zwischen dem optischen Auslasselement (20) und dem optischen Einlasselement (18) zum Objekt und zurück erzeugbar macht,
der Referenzlichtweg (6) eine vorgegebene Referenzdistanz aufweist, eine Abschwächungseinrichtung (11) mit örtlich und/oder zeitlich variabler Abschwächung umfasst und so konfiguriert ist, dass er von der Sendeeinheit (7) erzeugte Lasermessstrahlung über die Abschwächungseinrichtung (11) zur Empfangseinheit (17) leitbar macht,
und die Auswertungseinrichtung konfiguriert ist zum Ableiten einer Distanz zum Objekt unter Verwendung von mit der Empfangseinheit (17) empfangener vom Objekt zurückkommender Lasermessstrahlung und von mit der Empfangseinheit (17) empfangener über den Referenzlichtweg (6) geführter Lasermessstrahlung, wobei intensitätsabhängige systematische Fehler beim Ableiten der Distanz zum Objekt kompensiert werden,
wobei der Referenzlichtweg (6) so angelegt ist, dass er einen Anteil der Lasermessstrahlung der Sendeeinheit (7) vor dem Durchtritt durch das optische Auslasselement (20) aufnimmt, diesen Anteil ohne Kontakt zur Umgebung des Distanzmessmoduls zur Abschwächungseinrichtung (11) führt, **dadurch gekennzeichnet, dass** der Referenzlichtweg weiter so angelegt ist, dass er einen abgeschwächten Anteil nach der Abschwächungseinrichtung (11) durch das optische Einlasselement (18) zur Empfangseinheit (17) weiterleitet, wobei direkt vor dem optischen Einlasselement (18) ein Abschnitt des Referenzlichtwegs (6) ausserhalb des Distanzmessmoduls liegt.

2. Vermessungsgerät (1) nach Anspruch 1, **dadurch gekennzeichnet, dass** zumindest in dem Abschnitt des Referenzlichtwegs ausserhalb des Distanzmessmoduls der Referenzlichtweg (6) unidirektional ausgebildet ist.

3. Vermessungsgerät (1) nach Anspruch 1 oder 2, **dadurch gekennzeichnet, dass** der ganze Referenzlichtweg (6) unidirektional ausgebildet ist.

4. Vermessungsgerät (1) nach Anspruch 1 bis 3, **dadurch gekennzeichnet, dass** von der Sendeeinheit (7) erzeugte Lasermessstrahlung für den Referenzlichtweg (6) im Distanzmessmodul auf einem am Vermessungsgerät fest angeordneten Abschnitt geführt ist und ausserhalb des Distanzmessmoduls auf einen relativ zum optischen Empfangskanal bewegten Abschnitt gelangt.

5. Vermessungsgerät (1) nach einem der Ansprüche 1 bis 4, **dadurch gekennzeichnet, dass** ein optisches Umlenkelement (15), insbesondere eine rotierbare Spiegelfläche (16), einen Wechsel zwischen der Messung der Referenzdistanz über den Referenzlichtweg (6) und einer Messung über den Messlichtweg (5) erzielbar macht, wobei das Umlenkelement (15) je phasenweise den Referenzlichtweg (6) oder den Messlichtweg (5) durch das optische Einlasselement (18) mit der Empfangseinheit (17) verbindet bzw. diese Verbindung unterbricht.

6. Vermessungsgerät (1) nach einem der Ansprüche 1 bis 4, **dadurch gekennzeichnet, dass** das Vermessungsgerät (1) ein erstes Geräteteil (25) mit einem Abschnitt des Referenzlichtwegs (6) und ein zweites Geräteteil (26) mit dem optischen Auslasselement (20) und dem optischen Einlasselement (18) umfasst, wobei ein Wechsel zwischen der Messung der Referenzdistanz über einen Referenzlichtweg (6) und einer Messung über den Messlichtweg (5) durch eine Relativbewegung zwischen dem ersten Geräteteil (25) und dem zweiten Geräteteil (26) erzielbar gemacht ist und dazu der Referenzlichtweg (6) so dem optischen Einlasselement (18) zugeordnet ist, dass bei einer vorgegebenen Relativlage der beiden Geräteteile (25, 26) der Referenzlichtweg (6) so auf das optische Einlasselement (18) gerichtet ist, dass die Lasermessstrahlung beim Ende des Referenzlichtwegs (6) durch das optische Einlasselement (18) zur optischen Empfangseinheit (17) gelangt, und dass bei anderen Relativlagen der beiden Geräteteile (25, 26) der Messlichtweg (5) durch das optische Einlasselement (18) zur Empfangseinheit (17) führt.

7. Vermessungsgerät nach Anspruch 6, **dadurch gekennzeichnet, dass** in der vorgegebenen Relativlage, in der die Lasermessstrahlung beim Ende des Referenzlichtwegs (6) durch das optische Einlasselement (18) zur optischen Empfangseinheit (17) gelangt, der Messlichtweg (5) vom optischen Auslasselement (20) zum optischen Einlasselement (18) zumindest teilweise unterbrochen ist, so dass Lasermessstrahlung vom Referenzlichtweg (6) ohne Lasermessstrahlung vom Messlichtweg (5) zur Empfangseinheit (17) gelangt.

8. Vermessungsgerät nach Anspruch 6 oder 7, **dadurch gekennzeichnet, dass** die Abschwächung der Abschwächungseinrichtung (11) mittels einer relativen Drehbewegung zwischen den Geräteteilen (25, 26) veränderbar ist und sich dabei die Signalamplitude auf dem Referenzlichtpfad abhängig von der relativen Drehlage verändert.

9. Vermessungsgerät nach einem der Ansprüche 6 bis 8, **dadurch gekennzeichnet, dass** die Referenzdistanz des Referenzlichtwegs (6) bei einer relativen Drehbewegung zwischen den Geräteteilen (25, 26) unverändert konstant bleibt.

10. Vermessungsgerät nach einem der Ansprüche 1 bis 9, **dadurch gekennzeichnet, dass** die Abschwächungseinrichtung (11) so aufgebaut ist, dass der ihr zugeordnete Abschwächungsfaktor mechanisch oder elektronisch einstellbar ist.

11. Vermessungsgerät nach Anspruch 10, **dadurch gekennzeichnet, dass** die Verstellbarkeit zumindest teilweise dadurch erzielbar ist, dass der Referenzlichtweg (6) und zumindest ein Teil der Abschwächungseinrichtung (11) relativ zueinander verstellbar sind, so dass der Referenzlichtweg (6) durch Bereiche der Abschwächungseinrichtung (11) mit unterschiedlichen Abschwächungsfaktoren führbar ist.

12. Vermessungsgerät nach Anspruch 10 oder 11, **dadurch gekennzeichnet, dass** die Abschwächungseinrichtung (11) mindesten einen transmissiven und/oder mindestens einen reflexiven Abschwächungsbereich umfasst und dabei insbesondere reflektierende Elemente mit unterschiedlichen Reflexionsfaktoren und/oder transmissive Elemente mit unterschiedlichen Transmissionsfaktoren aufweist, wobei insbesondere Diffusor-Elemente, Hologramm-Elemente, diffraktive optische Elemente, Gitterelemente, Graufilter, Graukeile, streuenden Filme, Verlaufsplatten oder Streuplatten eingesetzt sind.

13. Vermessungsgerät nach einem der Ansprüche 10 bis 12, **dadurch gekennzeichnet, dass** die Abschwächungseinrichtung einen Aktuator zum Verstellen zumindest eines Teils der Abschwächungseinrichtung umfasst.

14. Vermessungsgerät nach einem der Ansprüche 10 bis 13, **dadurch gekennzeichnet, dass** die Abschwächungseinrichtung mindestens ein elektronisch einstellbares Abschwächelement, insbesondere mit Flüssigkristallen oder mit faseroptischen Modulatoren, umfasst.

## Claims

1. Measuring appliance (1), more particularly a tachymeter, theodolite, laser scanner, profiler or laser tracker, for performing distance measurements to an object, with a distance measuring module comprising an optical transmitter channel and an optical reception channel, with a reference light path (6) and with an evaluation device, wherein
the optical transmitter channel comprises a transmitter unit (7) for transmitting laser measurement radiation and an optical outlet element (20),
the optical reception channel comprises an optical inlet element (18) and a reception unit (17) for receiving laser measurement radiation,
the measuring appliance (1) renders a measurement light path (5) to the object and back again producible outside of the distance measuring module between the optical outlet element (20) and the optical inlet element (18),
the reference light path (6) has a predetermined reference distance, comprises an attenuation device (11) with an attenuation variable in space and/or time and is configured in such a way that it renders laser measurement radiation produced by the transmitter unit (7) guidable to the reception unit (17) via the attenuation device (11),
and the evaluation device is configured to derive a distance to the object using laser measurement radiation returning from the object, received by the reception unit (17), and laser measurement radiation guided over the reference light path (6), received by the reception unit (17), wherein intensity-dependent systematic errors when deriving the distance to the object are compensated, the reference light path (6) being laid out in such a way that it receives a portion of the laser measurement radiation of the transmitter unit (7) prior to the passage through the optical outlet element (20), guides said portion to the attenuation device (11) without contact with the surroundings of the distance measuring module and forwards an attenuated portion downstream of the attenuation device (11) to the reception unit (17) through the optical inlet element (18),
**characterized in that**
the reference light path (6) is laid out further in such a way that a section of the reference light path directly upstream of the optical inlet element (18) lies outside of the distance measuring module.

2. Measuring appliance (1) according to Claim 1, **characterized in that** at least in the section lying outside of the distance measuring module, the reference light path (6) has a unidirectional embodiment.

3. Measuring appliance (1) according to Claim 1 or 2, **characterized in that** the entire reference light path (6) has a unidirectional embodiment.

4. Measuring appliance (1) according to any one of Claims 1 to 3, **characterized in that** laser measurement radiation for the reference light path (6) produced by the transmitter unit (7) is guided along a section fixedly arranged at the measuring appliance in the distance measuring module and reaches a section that moves relative to the optical reception channel outside of the distance measuring module.

5. Measuring appliance (1) according to any one of Claims 1 to 4, **characterized in that** an optical deflection element (15), more particularly a rotatable mirror face (16), renders a change attainable between the measurement of the reference distance over the reference light path (6) and a measurement over the measurement light path (5), wherein the deflection element (15), in each case depending on phase, connects the reference light path (6) or the measurement light path (5) to the reception unit (17) through the optical inlet element (18) or interrupts said connection.

6. Measuring appliance (1) according to any one of Claims 1 to 4, **characterized in that** the measuring appliance (1) comprises a first appliance part (25) with a section of the reference light path (6) and a second appliance part (26) with the optical outlet element (20) and the optical inlet element (18), wherein a change between the measurement of the reference distance over a reference light path (6) and a measurement over the measurement light path (5) is rendered attainable by a relative movement between the first appliance part (25) and the second appliance part (26) and, to this end, the reference light path (6) is assigned to the optical inlet element (18) in such a way that, in the case of a given relative position between the two appliance parts (25, 26), the reference light path (6) is directed on the optical inlet element (18) in such a way that the laser measurement radiation reaches through the optical inlet element (18) to the optical reception unit (17) at the end of the reference light path (6) and that, in other relative positions of the two appliance parts (25, 26), the measurement light path (5) leads through the optical inlet element (18) to the reception unit (17).

7. Measuring appliance according to Claim 6, **characterized in that**, in the predetermined relative position in which the laser measurement radiation at the end of the reference light path (6) reaches the optical reception unit (17) through the optical inlet element (18), the measurement light path (5) from the optical outlet element (20) to the optical inlet element (18) is at least partly interrupted such that laser measurement radiation from the reference light path (6) reaches the reception unit (17) without laser measurement radiation from the measurement light path (5).

8. Measuring appliance according to Claim 6 or 7, **characterized in that** the attenuation of the attenuation device (11) is changeable by means of a relative rotational movement between the appliance parts (25, 26) and, in the process, the signal amplitude on the reference light path changes depending on the relative rotational position.

9. Measuring appliance according to any one of Claims 6 to 8, **characterized in that** the reference distance of the reference light path (6) remains unchangeably constant in the case of a relative rotational movement between the appliance parts (25, 26).

10. Measuring appliance according to any one of Claims 1 to 9, **characterized in that** the attenuation device (11) is constructed in such a way that the attenuation factor assigned thereto is mechanically or electronically adjustable.

11. Measuring appliance according to Claim 10, **characterized in that** the adjustability is at least partly attainable by virtue of the reference light path (6) and at least a part of the attenuation device (11) being adjustable relative to one another in such a way that the reference light path (6) is guidable through regions of the attenuation device (11) with different attenuation factors.

12. Measuring appliance according to Claim 10 or 11, **characterized in that** the attenuation device (11) comprises at least one transmissive and/or at least one reflective attenuation region and, in the process, comprises, in particular, reflective elements with different reflection factors and/or transmissive elements with different transmission factors, wherein, in particular, use is made of diffuser elements, hologram elements, diffractive optical elements, grating elements, gray filters, gray wedges, diffusing films, graduated plates or diffusing plates.

13. Measuring appliance according to any one of Claims 10 to 12, **characterized in that** the attenuation device comprises an actuator for adjusting at least one part of the attenuation device.

14. Measuring appliance according to any one of Claims 10 to 13, **characterized in that** the attenuation device comprises at least one electronically adjustable attenuation element, more particularly comprising liquid crystals or fiber-optic modulators.

## Revendications

1. Appareil d'arpentage (1), en particulier tachymètre, théodolite, scanner laser, profileur ou laser de poursuite, destiné à effectuer des mesures de distance par rapport à un objet à l'aide d'un module de mesure de distance, lequel comprend un canal d'émission optique et un canal de réception optique, doté d'un chemin optique de référence (6) et d'un dispositif d'analyse, dans lequel
le canal d'émission optique comprend une unité émettrice (7) destinée à émettre un faisceau laser de mesure et un élément de sortie optique (20),
le canal de réception optique comprend un élément d'entrée optique (18) et une unité réceptrice (17) destinée à recevoir le faisceau laser de mesure,
l'appareil d'arpentage (1) permet de produire un chemin optique de mesure (5) à l'extérieur du module de mesure de distance entre l'élément de sortie optique (20) et l'élément d'entrée optique (18) vers l'objet et inversement,
le chemin optique de référence (6) comporte une distance de référence prédéfinie, comprend un dispositif d'atténuation (11) avec une atténuation variable dans l'espace et/ou dans le temps et est configuré de façon à pouvoir guider le faisceau laser de mesure produit par l'unité émettrice (7) vers l'unité réceptrice (17) par le biais du dispositif d'atténuation (11),
et l'unité d'analyse est configurée pour dériver une distance par rapport à l'objet en utilisant le faisceau laser de mesure retourné par l'objet et reçu par l'unité réceptrice (17) et le faisceau laser de mesure guidé par le chemin optique de référence (6) et reçu par l'unité réceptrice (17), dans lequel des erreurs systématiques dépendant de l'intensité sont compensées lors de la dérivation de la distance par rapport à l'objet, dans lequel le chemin optique de référence (6) est disposé de sorte qu'il accueille une fraction du faisceau laser de mesure de l'unité émettrice (7) avant le passage à travers l'élément de sortie optique (20), guide cette fraction sans contact vers l'environnement du module de mesure de distance vers le dispositif d'atténuation (11), **caractérisé en ce que** le chemin optique de référence (6) est en outre disposé de sorte qu'il transmet après le dispositif d'atténuation (11) une fraction atténuée vers l'unité réceptrice (17) à travers l'élément d'entrée optique (18), dans lequel une section du chemin optique de référence (6) est située à l'extérieur du module de mesure de distance directement devant l'élément d'entrée optique (18).

2. Appareil d'arpentage (1) selon la revendication 1, **caractérisé en ce que** le chemin optique de référence (6) est réalisé comme unidirectionnel au moins dans la section du chemin optique de référence située à l'extérieur du module de mesure de distance.

3. Appareil d'arpentage (1) selon la revendication 1 ou 2, **caractérisé en ce que** tout le chemin optique de référence (6) est réalisé comme unidirectionnel.

4. Appareil d'arpentage (1) selon l'une des revendications 1 à 3, **caractérisé en ce qu'**un faisceau laser de mesure généré par l'unité émettrice (7) pour le chemin optique de référence (6) dans le module de mesure de distance est guidé sur une section disposée de manière fixe sur l'appareil d'arpentage et parvient à une section déplacée par rapport au canal de réception optique à l'extérieur du module de mesure de distance.

5. Appareil d'arpentage (1) selon l'une des revendications 1 à 4, **caractérisé en ce qu'**un élément de déviation optique (15), en particulier une surface de miroir rotative (16), permet de connaître un changement entre la mesure de la distance de référence par le biais du chemin optique de référence (6) et une mesure par le biais du chemin optique de mesure (5), dans lequel l'élément de déviation (15), en fonction de la phase, relie le chemin optique de référence (6) ou le chemin optique de mesure (5) à l'unité réceptrice (17) à travers l'élément d'entrée optique (18) ou rompt cette liaison.

6. Appareil d'arpentage (1) selon l'une des revendications 1 à 4, **caractérisé en ce que** l'appareil d'arpentage (1) comprend une première partie d'appareil (25) dotée d'une section du chemin optique de référence (6) et une deuxième partie d'appareil (26) dotée de l'élément de sortie optique (20) et de l'élément d'entrée optique (18), dans lequel un changement entre la mesure de la distance de référence par le biais du chemin optique de référence (6) et une mesure par le biais du chemin optique de mesure (5) peut être connu par un déplacement relatif entre la première partie d'appareil (25) et la deuxième partie d'appareil (26) et à cet effet le chemin optique de référence (6) est associé à l'élément d'entrée optique (18) de telle façon que dans le cas d'une position relative prédéfinie des deux parties d'appareil (25, 26) le chemin optique de référence (6) est orienté sur l'élément **d'entrée** optique (18) de sorte que le faisceau laser de mesure parvient, à l'extrémité du chemin optique de référence (6), à l'unité réceptrice optique (17) à travers l'élément **d'entrée** optique (18) et que dans le cas **d'autres** positions relatives des deux parties **d'appareil** (25, 26) le chemin optique de mesure (5) mène à l'unité réceptrice (17) à travers l'élément **d'entrée** optique (18).

7. Appareil d'arpentage selon la revendication 6, **caractérisé en ce que** dans la position relative prédéfinie, où le faisceau laser de mesure parvient, à l'extrémité du chemin optique de référence (6), à l'unité réceptrice optique (17) à travers l'élément d'entrée optique (18), le chemin optique de mesure (5) depuis l'élément de sortie optique (20) jusqu'à l'élément d'entrée optique (18) est au moins partiellement interrompu, de sorte que du faisceau laser de mesure du chemin optique de référence (6) parvient à l'unité réceptrice (17) sans faisceau laser de mesure du chemin optique de mesure (5).

8. Appareil d'arpentage selon la revendication 6 ou 7, **caractérisé en ce que** l'atténuation du dispositif d'atténuation (11) est modifiable au moyen d'un mouvement de rotation relatif entre les parties d'appareil (25, 26) et l'amplitude du signal sur le chemin optique de référence varie ainsi en fonction de la position relative.

9. Appareil d'arpentage selon l'une des revendications 6 à 8, **caractérisé en ce que** la distance de référence du chemin optique de référence (6) reste constante et invariable en cas de mouvement de rotation relatif entre les parties d'appareil (25, 26).

10. Appareil d'arpentage selon l'une des revendications 1 à 9, **caractérisé en ce que** le dispositif d'atténuation (11) est conçu de telle sorte que le facteur d'atténuation qui lui est associé est réglable de façon mécanique ou électronique.

11. Appareil d'arpentage selon la revendication 10, **caractérisé en ce que** le caractère réglable peut être au moins en partie atteint **en ce que** le chemin optique de référence (6) et au moins une partie du dispositif d'atténuation (11) sont réglables l'un par rapport à l'autre, de sorte que le chemin optique de référence (6) peut être guidé à travers des zones du dispositif d'atténuation (11) dotées de facteurs d'atténuation différents.

12. Appareil d'arpentage selon la revendication 10 ou 11, **caractérisé en ce que** le dispositif d'atténuation (11) comprend au moins une zone de dispositif d'atténuation qui soit transmissive et au moins une qui soit réflectrice et comporte ainsi en particulier des éléments réfléchissants dotés de facteurs de réflexion différents et/ou des éléments transmissifs dotés de facteurs de transmission différents, dans lequel sont utilisés en particulier des éléments diffuseurs, des éléments holographiques, des éléments de diffraction optique, des éléments de grille, des filtres gris, des échelles de gris, des films diffusants, des plaques à dégradé ou des plaques de diffusions.

13. Appareil d'arpentage selon l'une des revendications 10 à 12, **caractérisé en ce que** le dispositif d'atténuation comprend un actionneur destiné à régler au moins une partie du dispositif d'atténuation.

14. Appareil d'arpentage selon l'une des revendications 10 à 13, **caractérisé en ce que** le dispositif d'atténuation comprend au moins un élément d'atténuation électroniquement réglable, en particulier doté de cristaux liquides ou de modulateurs de fibre optique.
